# EUROPÄISCHE PATENTANMELDUNG

(11) **EP 3 527 732 A1**
(43) Veröffentlichungstag der Anmeldung: **21.08.2019**
(21) Anmeldenummer: 19150459.6
(22) Anmeldetag: 07.01.2019
(51) Int. Cl.: E03F 3/04, F16L 9/19, E02B 3/10, F16L 55/18

(54) **WANDELEMENT FÜR EINEN ABWASSERKANAL UND SYSTEM ZUM AUFTRENNEN EINES ABWASSERKANALS**

(30) Priorität: 14.02.2018 CH 1802018
(71) Anmelder: Wenger, Projekte und Coaching, 6315 Morgarten (CH)
(72) Erfinder: Wenger, Hermann, 6315 Morgarten (CH)
(74) Vertreter: Hepp Wenger Ryffel AG

(57) **Zusammenfassung**

Die Erfindung betrifft ein Wandelement (1) zum semistationären Einbau in einen insbesondere geschlossenen Abwasserkanal (20), wobei das Wandelement (1) eine erste Oberfläche (2) und eine zu dieser parallel beabstandete zweite Oberfläche (3) aufweist, wobei das Wandelement (1) zwei Längsseiten (4) und zwei Schmalseiten (5) aufweist, wobei zumindest im Bereich einer Schmalseite (5) Verbindungsmittel (6) vorgesehen sind, wobei die Verbindungsmittel (6) vorzugsweise lösbar mit der Wandelement (1) verbunden oder verbindbar sind, wobei die Verbindungsmittel (6) auf der ersten oder der zweiten Oberfläche (4, 5) angeordnet sind, wobei auf der ersten Oberfläche (4) und/oder auf der zweiten Oberfläche (5) zumindest ein erstes Anschlusselement (7) angeordnet ist, mittels welchem das Wandelement (1) an ein Befestigungselement, insbesondere an eine Vertikalstrebe (9), anbringbar ist.

## Beschreibung

Die vorliegende Erfindung betrifft ein Wandelement zum semistationären Einbau in einen insbesondere geschlossenen Abwasserkanal gemäss dem Oberbegriff des unabhängigen Anspruchs. Die Erfindung betrifft ferner ein System zum Auftrennen eines insbesondere geschlossenen Abwasserkanals in zwei, entlang einer Längsrichtung des Abwasserkanals, parallele Kanalabschnitte, umfassend zumindest ein erfindungsgemässes Wandelement.

Aus dem Stand der Technik sind Wandelemente für den Hochwasserschutz bekannt, welche in seitliche Führungsschienen eingeschoben werden und mit diesen fest verbunden werden. Solche Systeme sind für den festen Einbau gedacht und benötigen fest installierte Führungsschienen.

Es ist daher Aufgabe der Erfindung ein Wandelement zum semistationären Einbau in einen Abwasserkanal anzugeben, welches die Nachteile des Bekannten vermeidet und insbesondere keine fest installierten Führungsschienen zur Montage benötigt und bei der Sanierung von Kanalabschnitten schnell und einfach auf- und abbaubar ist.

Diese Aufgabe wird durch das in dem unabhängigen Patentanspruch definierte Wandelement gelöst. Weitere Ausführungsformen ergeben sich aus den abhängigen Patentansprüchen.

Ein erfindungsgemässes Wandelement zum semistationären Einbau in einen insbesondere geschlossenen Abwasserkanal umfasst eine erste Oberfläche und eine zu dieser parallel beabstandete zweite Oberfläche. Das Wandelement ist somit als flächiges Wandelement gebildet.

Das Wandelement umfasst ferner zwei Längsseiten und zwei Schmalseiten. Die Längsseiten und die Schmalseiten bilden demzufolge einen umlaufenden Rand des Wandelementes. Es ist an dieser Stelle anzumerken, dass die Längsseite und die Schmalseite nicht zwangsläufig als Oberfläche ausgebildet sein müssen (sondern auch eine gedachte Hüllfläche umfassen können).

Zumindest im Bereich einer Schmalseite sind Verbindungsmittel vorgesehen, welche vorzugsweise lösbar mit dem Wandelement verbunden oder verbindbar sind, wobei die Verbindungsmittel auf der ersten oder der zweiten Oberfläche angeordnet sind.

Die Verbindungsmittel dienen somit der Verbindung von zwei an den Schmalseiten benachbarten Wandelementen.

Erfindungsgemäss ist auf der ersten Oberfläche und/oder auf der zweiten Oberfläche zumindest ein erstes Anschlusselement angeordnet, mittels welchem das Wandelement an ein Befestigungselement, insbesondere an eine Vertikalstrebe, anbringbar ist.

Durch die erfindungsgemässe Anordnung des Anschlusselementes wird der Einbau des Wandelementes ohne die Notwendigkeit von fest installierten Befestigungselementen, wie aus dem Stand der Technik bekannt, ermöglicht.

Bevorzugt ist jedem der ersten Anschlusselemente ein zweites Anschlusselement zugeordnet. Das erste Anschlusselement und das zweite Anschlusselement bilden somit ein Anschlusselementepaar. Vorzugsweise sind die Anschlusselemente des Anschlusselementepaares im bestimmungsgemässen Gebrauch im Wesentlichen vertikal übereinander angeordnet. Im Sinne der vorliegenden Erfindung bedeutet "im Wesentlichen vertikal übereinander angeordnet", dass die Anschlusselemente rechtwinklig zu einem Kanalboden (der typischerweise etwas geneigt ist) übereinander angeordnet sind.

Die Verbindungsmittel weisen bevorzugt ein Horizontalspannelement, insbesondere einen Schnellspanner, auf.

Als Schnellspanner im Sinne der vorliegenden Erfindung sind Verbindungsmittel gemeint, welche eine einfache und schnelle Verbindung zweier benachbarten Wandelemente ermöglichen. Insbesondere eignen sich sog. Hebelspanner, mit welchen die Wandelemente einfach und einhändig verspannt werden können. Zudem ist oft die Einstellung der Vorspannkraft mittels einer Gewindestange am Spannelement möglich.

Vorzugsweise sind die Verbindungsmittel an der ersten oder zweiten Oberfläche derart angeordnet, dass nur eine korrekte Einbauposition des Wandelements möglich ist. Bei einem Hebelspanner geschieht dies bevorzugt indem der Hebelmechanismus im Bereich einer Schmalseite und der Haken zum Einrasten des Hebelmechanismus im Bereich der anderen Schmalseite einer Oberfläche des Wandelements angeordnet sind

Bevorzugt sind an der ersten und/oder an der zweiten Schmalseite zumindest ein und vorzugsweise zwei Zentriermittel vorgesehen. Die Zentriermittel umfassen bevorzugt einen Dorn an der einen Schmalseite und eine entsprechende Öffnung an der anderen Schmalseite. Damit wird sichergestellt, dass die Wandelemente beim Verspannen korrekt positioniert und ausgerichtet werden.

Bevorzugt sind an der ersten und/oder an der zweiten Längsseite zumindest ein und vorzugsweise zwei Zentriermittel vorgesehen. Auch in diesem Fall umfassen die Zentriermittel bevorzugt einen Dorn an der einen Längsseite und eine entsprechende Öffnung an der anderen Längsseite. Damit wird einerseits sichergestellt, dass die Wandelemente beim Verspannen korrekt positioniert und ausgerichtet werden.

Die Zentriermittel sind ferner derart ausgebildet, dass nur eine korrekte Einbauposition des Wandelements möglich ist. Dies geschieht insbesondere indem der Dorn an der einen Schmal- bzw. Längsseite angeordnet und die entsprechende Öffnung an der anderen Schmal- bzw. Längsseite angeordnet ist.

Das Wandelement weist bevorzugt mindestens ein Dichtelement auf, welches stirnseitig zwischen der ersten und zweiten Oberfläche und vorzugsweise umlaufend entlang der Schmal- und Längsseiten angeordnet ist.

Das Dichtelement ist bevorzugt als Dichtung oder als Dichtwulst ausgebildet und dient der Abdichtung des Spaltes zwischen zwei benachbarten Wandelementen.

Bevorzugt sind die erste und die zweite Oberfläche durch separate Elemente gebildet, welche mit einem Verbindungselement miteinander verbunden werden.

Eine solche Ausbildung des Wandelementes ermöglicht die flexible Ausgestaltung eines Wandelementes, welches an die Umgebung/Aufgabe angepasst werden kann. Zudem wird somit das Gewicht eines Wandelements reduziert.

So kann es z.B. vorgesehen werden, dass die Wandstärke des Wandelements variierbar ist. Auch kann die Oberfläche des Wandelements, welche mit dem Abwasser in Berührung kommt, anders ausgestaltet werden als die Oberfläche, die an der Trockenseite des Abwasserkanals angeordnet ist.

Das Verbindungselement ist bevorzugt als Querstrebe, Wabenstruktur, Abstandhalter oder Kunststoffplatte ausgebildet.

Die Erfindung betrifft ferner ein System zum Auftrennen eines insbesondere geschlossenen Abwasserkanals in zwei, entlang einer Längsrichtung des Abwasserkanals, parallele Kanalabschnitte, insbesondere zum Abdichten eines ersten Kanalabschnittes gegenüber einem zweiten Kanalabschnitt.

Das erfindungsgemässe System umfasst zumindest ein Wandelement wie oben beschrieben.

Erfindungsgemäss umfasst das System ein Vertikalspannelement, mittels welchem das wenigstens eine Wandelementes gegenüber einem feststehenden Element des Kanales, insbesondere einer Kanaldecke, vertikal verspannbar ist.

Das Vertikalspannelement ist bevorzugt als Schnellspanner, insbesondere als Hebelspanner, ausgebildet. Das Vertikalspannelement ermöglicht das Verspannen des Wandelements in Richtung des Kanalbodens. Somit ist die daraus gebildete Trennwand fest in einem Kanal eingespannt. Zudem wird/werden durch die Vertikalspannung das Wandelement mit dem Kanalboden bzw zwei Längsseiten von übereinander angeordneten Wandelementen verspannt und somit abgedichtet, insbesondere wenn das Wandelement noch ein Dichtelement aufweist.

Bei einer alternativen Ausführungsform des Systems, welche ein Vertikalspannelement umfassen kann, weist das System zumindest eine Vertikalstrebe auf, wobei die Vertikalstrebe ein Eingriffselement aufweist, welches mit dem Anschlusselement in Eingriff bringbar ist.

Dadurch wird ein schneller Aufbau einer Trennwand mit einem erfindungsgemässen System ermöglicht, da das Anschlusselement mit einem Eingriffselement schnell und einfach in Eingriff bringbar ist.

Bevorzugt weist die Vertikalstrebe wenigstens ein Vertikalspannelement auf. Somit können bsp. mit einem einzigen Vertikalspannelement mehrere Wandelemente, die an den Längsseiten aneinander anliegen, verspannt und ggf. abgedichtet werden. Damit wird die Möglichkeit geschaffen, Trennwände schnell aufbauen zu können, da die einzelnen Wandelemente nur an den Schmalseiten miteinander verbunden werden müssen und beim Erreichen der gewünschten Höhe mit dem Vertikalspannelement in Richtung des Kanalbodens verspannt werden.

Das Eingriffselement ist bevorzugt als separates Element, insbesondere als Rohrschelle, ausgebildet und an der Vertikalstrebe individuell befestigbar.

Ein Eingriffselement, welches als separates Element ausgebildet ist, ist hinsichtlich der Flexibilität vorteilhaft. So kann z.B. vorgesehen werden, dass unterschiedliche Eingriffselemente, je nach Art der Vertikalstrebe, im System vorgesehen sind, wobei das Wandelement lediglich eine Art von Anschlusselement aufweist, das mit den unterschiedlichen Eingriffselementarten verbindbar ist.

Das Eingriffselement ist bevorzugt in der Form eines Hakens derart ausgebildet, dass beim Eingriff in das Anschlusselement ein vertikales Verschieben des Anschlusselementes und des Eingriffselementes ermöglicht ist.

Diese Ausführungsform ist besonders hinsichtlich einer nachträglichen, d.h. nach Anbringung des Wandelementes an die Vertikalstrebe, Höhenverstellung des Wandelementes vorteilhaft.

In einer bevorzugten Ausführungsform weist das Eingriffselement ein Längsloch zur Aufnahme eines Spannkeils auf. Das Anschlusselement weist dabei eine Auflagefläche für den Spannkeil auf. Durch Einschieben des Spannkeils in das Längsloch kann somit das Wandelement gegenüber der Vertikalstrebe verspannt werden. In einem solchen Fall weist das Wandelement bevorzugt keine Vertikalspannelemente auf.

Zur Vereinfachung des Aufbaus kann vorgesehen werden, dass das Horizontalspannelement ebenfalls einen Spannkeil umfasst.

Bevorzugt weist die zumindest eine Vertikalstrebe Befestigungsmittel zum Befestigen der Vertikalstrebe im Kanal auf.

Das Befestigungsmittel ist dabei bevorzugt als hydraulisches Element oder als mechanisches Element ausgebildet.

Beispielsweise kann die Vertikalstrebe als Spriess ausgebildet sein, wobei die Befestigungsmittel ein Gewinde umfassen. Auch eine Befestigung mittels eines Kniehebelmechanismus, welcher die Vertikalstrebe bspw. zwischen einem Kanalboden und einem oberen Anschlag vorspannen kann, ist denkbar. Auch eine Keilanordnung oder ein hydraulisch betätigter Kolben nach Art eines Wagenhebers sind dabei möglich.

Bevorzugt weist die Vertikalstrebe an wenigstens einem Ende einen Dorn auf, welcher in eine Bohrung des Kanalbodens und/oder des oberen Anschlages einsteckbar ist und eine sichere Befestigung der Vertikalstrebe im Abwasserkanal ermöglicht.

Der Dorn ist bevorzugt lösbar mit der Vertikalstrebe verbunden, so dass, je nach Anwendungsfall, der Dorn eingesetzt oder entfernt werden kann. Bei einer bevorzugten Ausführungsform ist der Dorn fest mit einer Trägerplatte befestigt. Die Trägerplatte ist derart ausgebildet, dass diese auf ein Ende der Vertikalstrebe aufgesteckt oder aufgeschoben werden kann. Insbesondere weist die Trägerplatte eine Vertiefung zur Aufnahme des Endes der Vertikalstrebe auf, so dass mit der zwischen dem Kanalboden und einem oberen Anschlag gespannten Vertikalstrebe das Ende der Vertikalstrebe formschlüssig in der Vertiefung der Trägerplatte aufgenommen wird. Eine solche Ausführungsform ist besonders vorteilhaft, da auf Standardvertikalstreben zurückgegriffen werden kann und lediglich die zum Ende der Vertikalstrebe passende Trägerplatte bereitgestellt werden muss.

Das System umfasst ferner bevorzugt zumindest eine Querstrebe zur Aufnahme von seitlichen Kräften, wobei die Querstrebe vorzugsweise in ihrer Länge verstellbar ist.

Da ein erfindungsgemässes System bevorzugt zum Auftrennen und Abdichten eines Abwasserkanals in zwei, entlang einer Längsrichtung des Abwasserkanals, parallele Kanalabschnitte Anwendung findet, wird durch die Querstreben die aus dem System gebildete Trennwand seitlich, bspw. an Kanalseitenwänden, abgestützt.

Die Erfindung wird Nachfolgend anhand eines bevorzugten Ausführungsbeispiels in Verbindung mit den Figuren beschrieben. Es zeigen:
- Figur 1:: eine Seitenansicht eines erfindungsgemässen Wandelements;
- Figur 2:: eine Seitenansicht einer ersten Ausführungsform eines erfindungsgemässen Systems;
- Figur 3:: eine Lateralansicht des Systems der Figur 2;
- Figur 4:: eine Detailansicht des Vertikalspannelements des erfindungsgemässen Systems gemäss den Figuren 2 und 3;
- Figur 5:: eine Detailansicht des Anschlusselementes zwischen zwei erfindungsgemässen Wandelementen;
- Figur 6:: ein in einen Kanal eingebautes System gemäss den Figuren 2 bis 4 in schematischer Darstellung;
- Figur 7:: eine perspektivische Ansicht des Eingriffselements des Systems gemäss den Figuren 2 bis 4;
- Figur 8: eine perspektivische Ansicht einer zweiten bevorzugen Ausführungsform eines Eingriffselements;
- Figur 9:: eine Draufsicht auf die Befestigung eines Wandelementes mit dem Eingriffselement der Figur 8;
- Figur 10:: eine perspektivische Ansicht einer Trägerplatte mit Dorn.

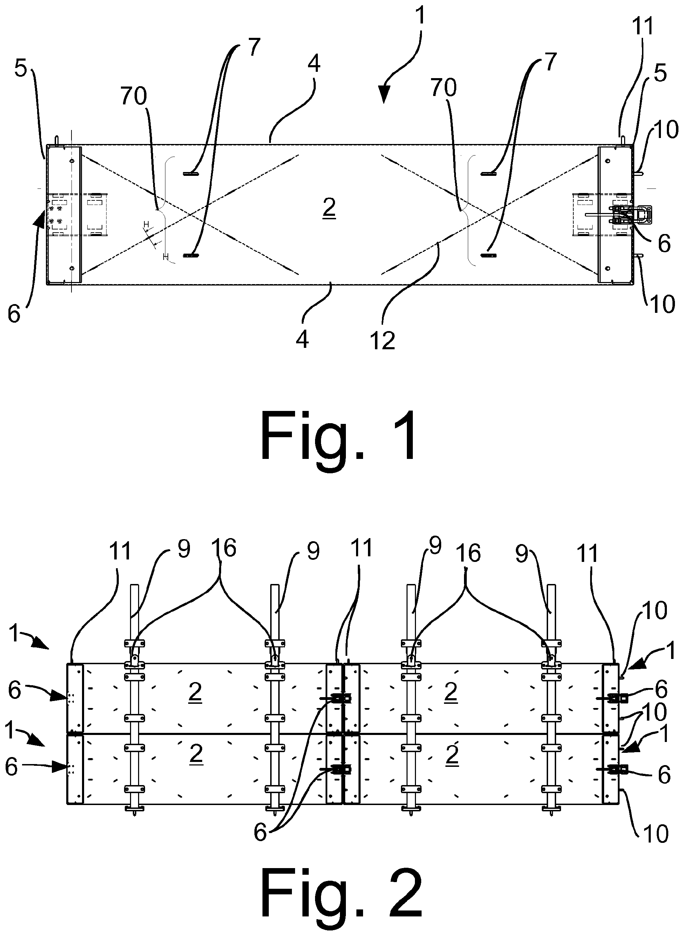

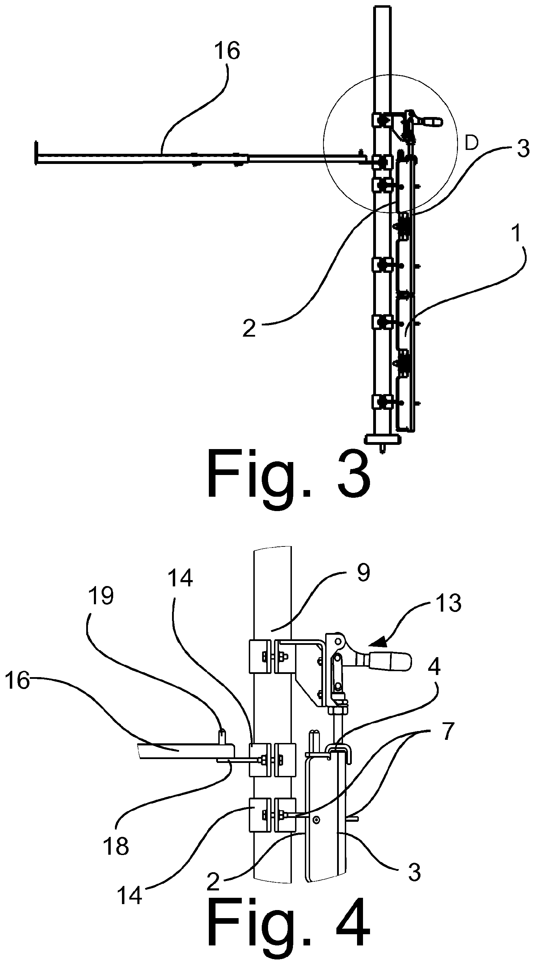

Figur 1 zeigt ein erfindungsgemässes Wandelement 1, wobei lediglich die erste Oberfläche 2 sichtbar ist. Die zweite, parallel dazu angeordnete Oberfläche 3 ist in den Figuren 3 bis 5 gezeigt.

Das Wandelement 1 ist im Wesentlichen rec ausgebildet, wobei die Oberflächen 2 und 3 voneinander beabstandet angeordnet sind. In der Figur 1 sind schematisch durch die gestrichelte Linie zwei kreuzförmige Verbindungselemente 12 gezeigt, welche als Abstandshalter zwischen den zwei Oberflächen 2 und 3 dienen. Somit wird eine starre und gleichzeitig leichte Struktur geschaffen.

An den Schmalseiten 5 des Wandelements 1 sind an der ersten Oberfläche 2 Verbindungsmittel 6 angebracht, welche zur Verbindung von an den jeweiligen Schmalseiten 5 benachbarten Wandelemente 1 dienen, wie in der Figur 2 dargestellt. Zu vermerken ist, dass in der Figur 1 an der rechten Schmalseite 5 ein Verbindungsmittel 6 in seiner Gesamtheit dargestellt ist, während an der linken Schmalseite 5 lediglich Befestigungsbohrungen für das Verbindungsmittel 6 sichtbar sind.

An der ersten Oberfläche 2 sind ferner Anschlusselemente 7 angeordnet, die als zur Oberfläche 2 senkrecht stehenden Laschen mit einem Loch ausgebildet sind. Im bestimmungsgemässen, montierten Zustand des Wandelements 1 bilden jeweils zwei übereinander angeordnete Anschlusselemente 7 ein Anschlusselementenpaar 70. Die Anschlusselemente 7 sind in der Figur 4 besser sichtbar. An einer der Längsseiten 4 (in diesem Fall die obere Längsseite) sowie an einer der Schmalseiten 5 (in diesem Fall die rechte Schmalseite) sind jeweils Zentriermittel 11 bzw. 10 in Form eines Dornes ausgebildet, die in entsprechende Öffnungen eines benachbarten Wandelementes 1 in Eingriff bringbar sind, um die Wandelemente 1 beim Aneinanderreihen auszurichten.

In der Figur 2 ist ein erfindungsgemässes System gezeigt, mit welchem eine Trennwand aus vier Wandelementen 1 gebildet worden ist.

Vertikalstreben 9 sind dabei zwischen einem nicht dargestellten Boden und einer oberen Konstruktion (welche eine Decke sein kann) eingespannt. Die Wandelemente 1, welche an der Schmalseite 5 benachbart angeordnet sind, werden mit dem jeweiligen Verbindungsmittel 6 miteinander verbunden. Die Wandelemente 1, welche an den jeweiligen Längsseiten 4 aneinander anliegen, werden durch ein später beschriebenes Vertikalspannelement 13 mit Bezug zu den Figuren 3 und 4 verspannt.

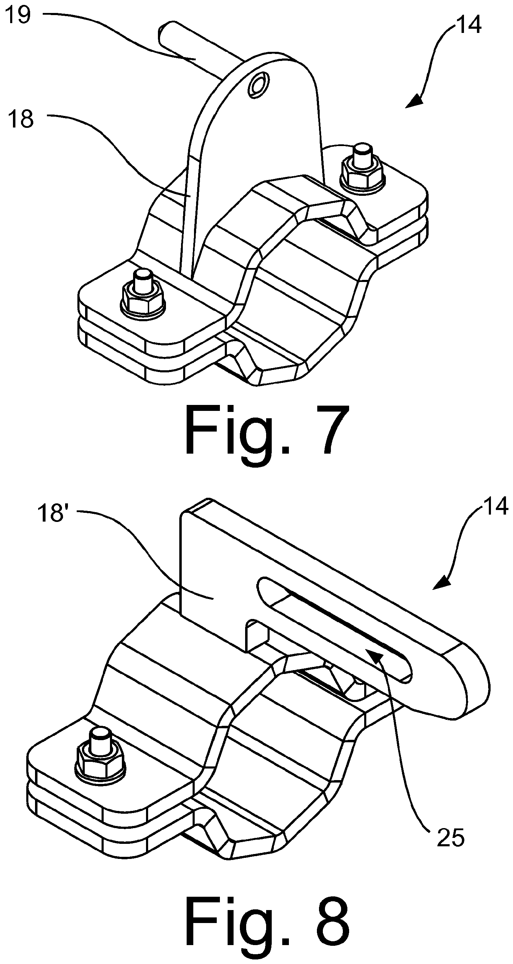

Die Vertikalstreben 9 weisen einen kreisrunden Querschnitt auf. An den Vertikalstreben 9 sind Eingriffselemente 14 angebracht, die als Rohrschelle mit einem Fortsatz 18, welcher einen Dorn 19 aufweist, ausgebildet sind. Ein solches Eingriffselement ist in der Figur 7 gesondert dargestellt. Der Dorn 19 ist in das Loch eines Anschlusselementes 7 eingesteckt und stellt somit die Verbindung zwischen Wandelement 1 und Vertikalstrebe 9 sicher. Das Eingriffselement 14 kann somit schnell mit dem Anschlusselement 7 in Eingriff gebracht werden. Zudem wird durch die Ausbildung mit dem Dorn 19 ermöglicht, Höhenunterschiede auszugleichen, ohne dass die Rohrschelle neu positioniert und an der Vertikalstreben 9 befestigt werden muss.

Um Querkräfte zu leiten sind ferner Querstreben 16 vorgesehen, welche ebenfalls mit der Vertikalstrebe 9 über ein Eingriffselement 14 verbunden sind. Die Querstreben 16 sind in der Länge einstellbar.

In den Figuren 3 und 4 ist das bereits oben erwähnte Vertikalspannelement 13 gezeigt. Das Vertikalspannelement 13 ist mittels einer Rohrschelle an der Vertikalstrebe 9 befestigt und weist einen Hebelmechanismus auf, mittels welchem die Wandelemente 1 am ihren Längsseiten 4 miteinander verspannt werden können. Durch die Ausbildung der Eingriffselemente mit dem Dorn 19 wird ermöglicht, dass eine Verschiebung der Wandelemente 1 beim Verspannen mit dem Vertikalspannelement 13 ausgeglichen werden kann, ohne dass die Rohrschelle neu positioniert und an der Vertikalstreben 9 befestigt werden muss, da das Anschlusselement 7 am Dorn 19 entlang gleiten kann.

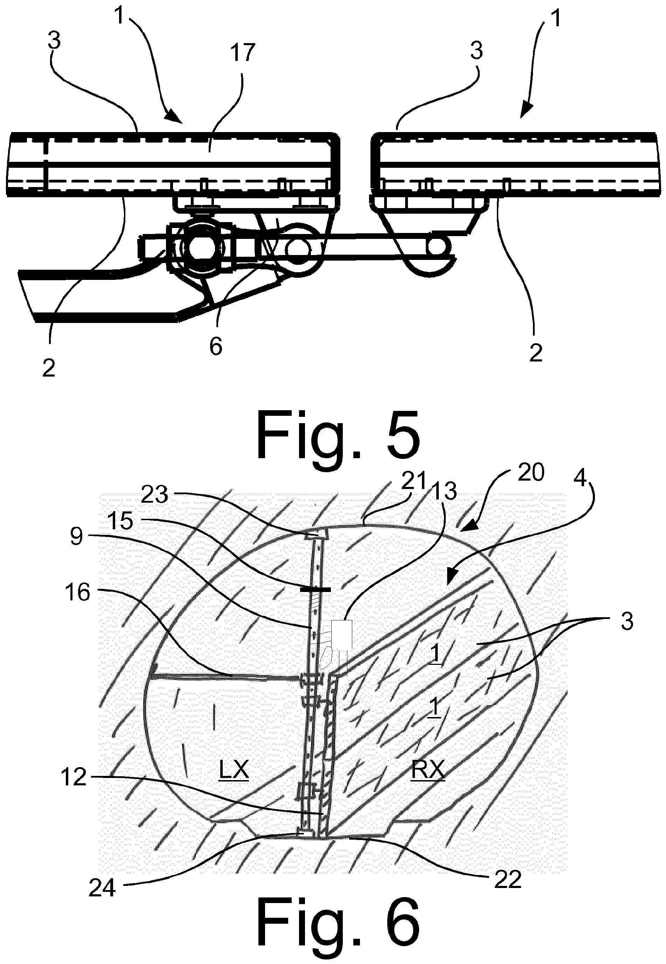

In der Figur 5 ist ferner eine Detailansicht der Verbindungsmittel 6 gezeigt, die als Hebelverschluss ausgebildet sind. Ferner in der Figur 5 ist eine Dichtung 17 sichtbar, welche umlaufend zwischen der ersten und der zweiten Oberfläche 2 bzw. 3 an den Längsseiten 4 und Schmalseiten 5 des Wandelements 1 angeordnet ist und eine sichere Abdichtung des Spaltes zwischen benachbarten Wandelementen 1 gewährleistet, insbesondere wenn diese mit den Verbindungsmittel 6 und den Vertikalspannelemente 13 verspannt werden.

In der Figur 6 ist schematisch ein geschlossener Abwasserkanal 20 gezeigt. Das System entspricht im Wesentlichen dem System der Figuren 1 bis 5, so dass der Übersicht halber nicht alle Komponenten mit einem Bezugszeichen versehen sind. Wesentliche Unterschiede sind, dass die Vertikalstrebe 9 als Spriess ausgebildet ist, und dass das Wandelement 1 als Verbindungselement 12 eine Schaumstoffplatte (statt des Kreuzprofils 12 der Figuren 1 und 2) aufweist.

Aus der Figur 6 ist die Einbauweise des erfindungsgemässen Systems ersichtlich. Die durch das System gebildete Trennwand dient der Trennung und Abdichtung eines ersten Kanalabschnittes LX gegenüber einem zweiten Kanalabschnitt RX. Der erste Kanalabschnitt LX und der zweite Kanalabschnitt RX erstrecken sich in Längsrichtung des Abwasserkanals parallel zueinander.

Zwischen der bogenförmigen Kanaldecke 21 und dem Kanalboden 22 sind Vertikalstreben 9, welche als Spriess ausgebildet sind, verspannt. Als Befestigungsmittel 15 dient ein Gewindeabschnitt des Spriesses 9, mittels welchem die Länge des Spriesses 9 einstellbar ist und somit ein oberes bzw. unteres Ende 23 bzw. 24 des Spriesses 9 gegen die Kanaldecke 21 bzw. den Kanalboden 22 pressbar sind. An den Spriessen 9 sind in bekannter Weise die Wandelemente 1 befestigt und mit den Vertikalspannelementen 13 gegen den Kanalboden 22 gepresst, so dass eine Abdichtung des zweiten Kanalabschnittes RX, bei welchem Abwasser fliesst, gegenüber dem ersten Kanalabschnitt LX, welcher "trocken" bleibt, gewährleistet wird. Um die Konstruktion noch zusätzlich zu stabilisieren werden die Querstreben 16 an einer Seitenwand des Abwasserkanals 20 abgestützt oder mit der Seitenwand befestigt.

In der Figur 8 ist ein Eingriffselement 14' gemäss einer weiteren Ausführungsform der vorliegenden Erfindung gezeigt. An der Rohrschelle ist ein 1-förmiger Fortsatz 18' befestigt, welcher ein Längsloch 25 aufweist.

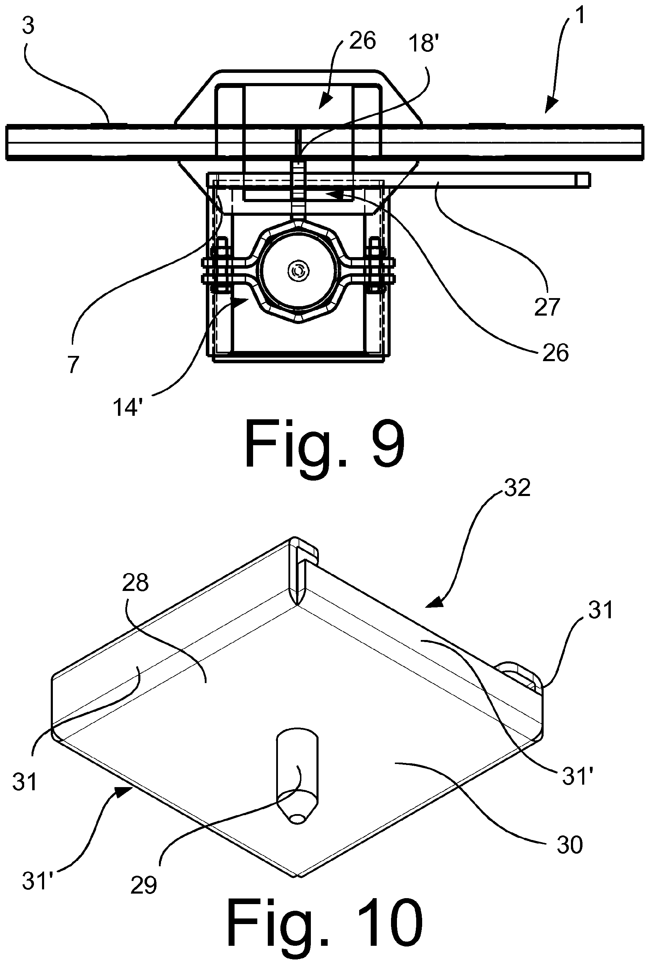

Die Figur 9 zeigt einen Querschnitt durch die Vertikalstrebe 9, die Befestigung eines Wandelements 1 mit der Vertikalstrebe 9 über ein Eingriffselement 14' ist dabei sichtbar.

Das Anschlusselement 7 weist eine Öffnung 26 zur Aufnahme des Fortsatzes 18' des Anschlusselements 14' auf. Die Tiefe der Öffnung 26 (senkrecht zur ersten Oberfläche 2) entspricht der Breite des Fortsatzes 18', so dass das Wandelement 1 im Wesentlichen spielfrei in Richtung senkrecht zur ersten Oberfläche 2 aufnehmbar ist. Die Breite der Öffnung 26 ist jedoch so gewählt, dass eine Verschiebung des Wandelements 1 in Richtung parallel zur Oberfläche 2 möglich ist. Damit wird der Aufbau einer Trennwand vereinfacht, da die Vertikalstreben 9 nicht mehr passgenau positioniert werden müssen.

Zum vertikalen Verspannen der Wandelemente 1 wird ein Spannkeil 27 in das Längsloch 25 eingeschlagen. Der Spannkeil 27 liegt dabei auf der Fläche des Anschlusselements 7. Dadurch kann das Wandelement 1 gegenüber der Vertikalstrebe 9 in Richtung des Kanalbodens 22 gedrückt werden. Bei einer solchen Ausführungsform kann auf die Verwendung von Vertikalspannelementen 13 verzichtet werden.

Um die Stabilität der Trennwand zu erhöhen kann an dem oberen bzw. unteren Ende 23 bzw. 24 der Vertikalstrebe 9 ein Aufsatz 28 mit einem Dorn 29 angebracht werden. Ein solcher Aufsatz 28 ist in der Figur 10 gesondert dargestellt.

Der Aufsatz 28 weist eine Trägerplatte 30 auf, an welcher der Dorn 29 befestigt ist. In der Ausführungsform gemäss der Figur 10 ist die Trägerplatte 30 aus einem Blechteil gebildet, dessen Randabschnitte 31, 31' um 90° gebogen worden ist, so dass an der dem Dorn 29 abgewandten Seite der Trägerplatte 30 eine Aufnahme 32 für dem oberen bzw. unteren Ende 23 bzw. 24 der Vertikalstrebe 9 gebildet wird. Die Abmessungen der Trägerplatte 30, sind derart ausgewählt, dass das obere oder untere Ende 23 bzw. 24 der Vertikalstrebe 9 in der Aufnahme 32 formschlüssig aufgenommen wird. Zudem sind die Endabschnitte 33 der Randabschnitte 31 wiederum um 90° angewinkelt ausgebildet und liegen in einer Ebene parallel zur Ebene der Trägerplatte 30. Damit kann der Aufsatz 28 auf das obere oder untere Ende 23 bzw. 24 der Vertikalstrebe 9 aufgeschoben werden. Beim Verspannen der Vertikalstrebe 9 zwischen der Kanaldecke 21 und dem Kanalboden 22 werden zusätzlich beide Enden 23 und 24 in die Aufnahme 32 gedrückt, so dass der Aufsatz formschlüssig mit der Vertikalstrebe befestigt wird. Der Dorn 29 wird dabei in ein bereits vorhandenes oder zum Zwecke der Montage der Trennwand gebohrtes Loch der Kanaldecke 21 bzw. Kanalboden 22 eingesteckt, so dass ein Verrutschen der Vertikalstrebe 9 im eingespannten Zustand verhindert wird.

## Patentansprüche

1. Wandelement (1) zum semistationären Einbau in einen insbesondere geschlossenen Abwasserkanal (20), wobei das Wandelement (1) eine erste Oberfläche (2) und eine zu dieser parallel beabstandete zweite Oberfläche (3) aufweist, wobei das Wandelement (1) zwei Längsseiten (4) und zwei Schmalseiten (5) aufweist, wobei zumindest im Bereich einer Schmalseite (5) Verbindungsmittel (6) vorgesehen sind, wobei die Verbindungsmittel (6) vorzugsweise lösbar mit dem Wandelement (1) verbunden oder verbindbar sind, wobei die Verbindungsmittel (6) auf der ersten oder der zweiten Oberfläche (4, 5) angeordnet sind, **dadurch gekennzeichnet, dass** auf der ersten Oberfläche (2) und/oder auf der zweiten Oberfläche (3) zumindest ein erstes Anschlusselement (7) angeordnet ist, mittels welchem das Wandelement (1) an ein Befestigungselement, insbesondere an eine Vertikalstrebe (9), anbringbar ist.

2. Wandelement (1) nach Anspruch 1, **dadurch gekennzeichnet, dass** jedem der ersten Anschlusselemente (7) ein zweites Anschlusselement (7) zugeordnet ist und somit ein Anschlusselementenpaar (70) bildet, wobei die Anschlusselemente (7) des Anschlusselementenpaares (70) vorzugsweise im bestimmungsgemässen Gebrauch im Wesentlichen vertikal übereinander angeordnet sind.

3. Wandelement (1) nach Anspruch 2, **dadurch gekennzeichnet, dass** die Verbindungsmittel (6) ein Horizontalspannelement, insbesondere einen Schnellspanner, aufweisen.

4. Wandelement (1) nach einem der Ansprüche 1 bis 3, **dadurch gekennzeichnet, dass** an der ersten und/oder an der zweiten Schmalseite (5) zumindest ein und vorzugsweise zwei Zentriermittel (10) vorgesehen sind.

5. Wandelement (1) nach einem der Ansprüche 1 bis 4, **dadurch gekennzeichnet, dass** an der ersten und/oder an der zweiten Längsseite (5) zumindest ein und vorzugsweise zwei Zentriermittel (11) vorgesehen sind.

6. Wandelement (1) nach einem der Ansprüche 1 bis 5, **dadurch gekennzeichnet, dass** das Wandelement (1) mindestens ein Dichtelement (17) aufweist, welches stirnseitig zwischen der ersten und der zweiten Oberfläche (2, 3) angeordnet ist und vorzugsweise umlaufend entlang den Längs- und Schmalseiten (4, 5) der Oberflächen angeordnet ist.

7. Wandelement (1) nach einem der Ansprüche 1 bis 7, **dadurch gekennzeichnet, dass** die erste und die zweite Oberfläche (2, 3) durch separate Elemente gebildet werden, welche mit einem Verbindungselement (12) miteinander verbunden sind.

8. Wandelement (1) nach Anspruch 7, wobei das Verbindungselement (12) als eines der Elemente
- Querstrebe
- Wabenstruktur
- Abstandhalter
- Kunststoffplatte
ausgebildet ist.

9. System zum Auftrennen eines insbesondere geschlossenen Abwasserkanals (20) in zwei, entlang einer Längsrichtung des Abwasserkanals, parallele Kanalabschnitte, insbesondere zum Abdichten eines ersten Kanalabschnittes (LX) gegenüber einem zweiten Kanalabschnitt (RX), umfassend zumindest eine Wandelement (1) nach einem der Ansprüche 1 bis 8, **dadurch gekennzeichnet, dass** das System ein Vertikalspannelement (13) zum vertikalen Verspannen des zumindest einen Wandelementes (1) gegenüber einem feststehenden Element des Kanales, insbesondere einer Kanaldecke (21) oder einem Kanalboden (22), aufweist.

10. System, insbesondere nach Anspruch 9, zum Auftrennen eines insbesondere geschlossenen Abwasserkanals (20) in zwei, entlang einer Längsrichtung des Abwasserkanals, parallele Kanalabschnitte, insbesondere zum Abdichten eines ersten Kanalabschnittes (LX) gegenüber einem zweiten Kanalabschnitt (RX), umfassend zumindest ein Wandelement (1) nach einem der Ansprüche 1 bis 8, **dadurch gekennzeichnet, dass** das System zumindest eine Vertikalstrebe (9) aufweist, wobei die Vertikalstrebe (9) ein Eingriffselement (14) aufweist, welches mit dem Anschlusselement (7) in Eingriff bringbar ist.

11. System nach Anspruch 10, **dadurch gekennzeichnet, dass** das Eingriffselement (14) als separates Element, insbesondere als Rohrschelle, ausgebildet ist, und die Vertikalstrebe (9) individuell befestigbar ist.

12. System nach Anspruch 10 oder 11, **dadurch gekennzeichnet, dass** das Eingriffselement (14) in der Form eines Hakens ausgebildet ist, derart, dass beim Eingriff in das Anschlusselement (7) ein vertikales Verschieben des Anschlusselementes (7) und des Eingriffselementes (14) ermöglicht ist.

13. System nach einem der Ansprüche 10 bis 12, **dadurch gekennzeichnet, dass** die zumindest eine Vertikalstrebe (9) Befestigungsmittel (15) zum Befestigen der Vertikalstrebe (9) im Kanal aufweist.

14. System nach Anspruch 13, wobei das Befestigungsmittel (15) als hydraulisches Element oder als mechanisches Element ausgebildet ist.

15. System nach einem der Anspruch 10 bis 14 umfassend zumindest eine Querstrebe (16) zur Aufnahme von seitlichen Kräften, wobei die Querstrebe (16) vorzugsweise in ihrer Länge verstellbar ist.
